Europäisches Patentamt

European Patent Office

Office européen des brevets

(19)

(11) Numéro de publication : **0 030 492**
**B1**

# (12) FASCICULE DE BREVET EUROPÉEN

(45) Date de publication du fascicule du brevet :
16.02.83

(21) Numéro de dépôt : 80401689.7

(22) Date de dépôt : 27.11.80

(51) Int. Cl.³ : **B 23 K 37/04**

(54) **Procédé et dispositif d'accostage de deux pièces cylindriques destinées à être assemblées bord à bord.**

(30) Priorité : 10.12.79 FR 7930192

(43) Date de publication de la demande :
17.06.81 Bulletin 81/24

(45) Mention de la délivrance du brevet :
16.02.83 Bulletin 83/07

(84) Etats contractants désignés :
BE DE FR IT NL

(56) Documents cités :
FR A 2 069 845
US A 3 555 875

(73) Titulaire : **LA SOUDURE AUTOGENE FRANCAISE**
**75, Quai d'Orsay**
**F-75321 Paris Cedex 07 (FR)**

(72) Inventeur : **Feix, Jacques**
**57, rue du Docteur Emile Roux**
**F-79200 Parthenay (FR)** .

(74) Mandataire : **Liboz, André et al**
**L'AIR LIQUIDE SOCIETE ANONYME POUR L'ETUDE**
**ET L'EXPLOITATION DES PROCEDES GEORGES**
**CLAUDE 75, Quai d'Orsay**
**F-75321 Paris Cedex 07 (FR)**

Jouve, 18, rue St-Denis, 75001 Paris, France

Procédé et dispositif d'accostage de deux pièces cylindriques destinées à être assemblées bord à bord

La présente invention concerne un procédé d'accostage de deux pièces cylindriques faites en un matériau de faible épaisseur suffisamment malléable pour se déformer sous l'effet d'une contrainte mécanique et destinées à être assemblées bord à bord pour former un élément unique, par exemple une virole et un fond circulaires en tôle, destinés à être soudés par leur rebord de façon à former un récipient, cuve ou analogue, les sections de ces deux pièces dans le plan desdits bords à assembler présentant des différences dimensionnelles empêchant une coïncidence rigoureuse et totale d'un bord avec l'autre.

L'accostage de deux pièces, c'est-à-dire la mise en regard de leurs rebords à assembler, par exemple l'accostage d'un fond et d'une virole en tôle le long de leurs rebords à souder, doit être réalisé avec une précision suffisante pour ne pas créer, entre les bords, une dénivellation susceptible d'entraîner la formation de zones de moindre résistance mécanique dans la pièce finale.

Dans le cas notamment de la fabrication de récipients, cuves ou analogues de section circulaire en tôle d'acier inoxydable, les épaisseurs des tôles peuvent varier de trois à six millimètres et les diamètres des récipients de 1,5 m à 6 m. Les tolérances de fabrication sur les diamètres sont généralement de l'ordre de 1/1 000 pour le fond et 1/1 000 ou 0,5/1 000 pour la virole, ce qui représente pour un diamètre de 2 m par exemple, une variation dimensionnelle de 2 mm pour le fond et 1 ou 2 mm pour la virole, variations dimensionnelles qui peuvent d'ailleurs s'additionner.

Même si on s'efforce de répartir exactement ces différences de diamètre sur toute la périphérie, il n'en reste pas moins vrai que, pour une citerne de deux mètres de diamètre et une épaisseur de tôle de 3 mm, on peut avoir une différence entre les diamètres, ce qui correspond à une dénivellation de 1,5 mm entre les pièces à souder. Une telle dénivellation entraîne une zone de moindre résistance mécanique et n'est pas compatible avec une fabrication de qualité.

La solution qui consisterait à amener les bords des deux pièces en coïncidence en soumettant la plus grande des deux à une déformation par rétreint sur la totalité de son diamètre, par exemple à rétreindre le fond dans le cas de la fabrication d'un récipient, mettrait en jeu des forces considérables qu'aucune technologie ne permet de réaliser actuellement. En ce qui concerne l'assemblage de deux viroles dont le diamètre de l'une est trop grand, il est déjà connu de rétreindre le bord de cette virole en exerçant une contrainte mécanique simultanément sur la totalité de pourtour du bord. On fait tourner un cercle doté de galets ou de sabots qui peuvent se rapprocher au centre de la virole, ce qui permet de les serrer sur celle-ci (voir le brevet FR-A-2 069 845).

La présente invention a pour objet de pallier les inconvénients sus-mentionnés et d'apporter une solution à un problème qui, actuellement, n'en comporte pas et propose à cet effet un procédé d'accostage qui consiste à amener les bords à assembler dans un même plan et en face l'un de l'autre, à exercer localement sur l'un d'eux une contrainte mécanique qui tend à le rétreindre de façon à l'amener en coïncidence avec l'autre bord, à rendre les bords ainsi amenés en coïncidence localement solidaires l'un de l'autre, à relâcher la contrainte mécanique puis à exercer successivement et de proche en proche de telles contraintes mécaniques et de telles opérations de solidarisation sur la totalité du pourtour desdites pièces.

Il est évident que la réalisation d'un rétreint local exige des efforts beaucoup moins importants que la réalisation d'un rétreint fait sur la totalité d'une pièce. On choisira bien entendu de rétreindre celle des deux pièces qui présente le plus de malléabilité (en général le fond dans le cas d'un récipient), l'autre pièce (en général la virole) étant simplement maintenue à sa forme définitive, par exemple circulaire.

Selon une autre caractéristique de l'invention, les bords précités sont rendus solidaires l'un de l'autre par soudage par points.

Ce soudage peut être effectué à l'arc électrique avec apport de métal d'appoint. On obtient ainsi une solidarisation locale et provisoire des deux pièces.

Selon encore une autre caractéristique, le soudage par points précité est effectué de l'intérieur des pièces.

Les opérations de pointage s'en trouvent grandement facilitées en raison de la plus grande facilité d'accès aux lèvres à souder.

Toujours selon l'invention, on entraîne les deux pièces, une fois rendues solidaires l'une de l'autre, en rotation d'un angle donné entre deux opérations successives de rétreint et de solidarisation, de façon à effectuer lesdites opérations en un endroit fixe donné.

Les différentes phases opératoires, en particulier les opérations de soudage par points, peuvent être ainsi effectuées à poste fixe.

On sait, par ailleurs, que les dispositifs d'accostage actuellement connus, utilisés pour la fabrication de récipients cylindriques, comportent deux anneaux rigides destinés à encercler les deux pièces (le fond et la virole) et formé chacun de deux éléments semi-circulaires rigides articulés à l'une de leurs extrémités et munis, à leurs autres extrémités, d'un vérin hydraulique de serrage. Ces dispositifs servent à maintenir les deux pièces lors des opérations de pointage mais ne sont nullement prévus pour rétreindre une pièce par rapport à l'autre, de sorte qu'ils ne permettent pas de réduire les dénivellations pouvant se produire entre les deux lèvres à souder.

L'invention vise également un dispositif d'accostage pour la mise en œuvre du procédé précité, ce dispositif comportant, comme les dispositifs connus, un anneau d'accostage destiné à être placé autour du bord de l'une des pièces et constitué par des éléments rigides présentant un profil correspondant à la section de ladite pièce et un organe de serrage au moins agissant sur deux desdits éléments pour les forcer en direction l'un de l'autre.

Le dispositif d'accostage selon l'invention se distingue toutefois des dispositifs connus par le fait qu'il comporte également un second anneau d'accostage destiné à être placé autour du bord de l'autre pièce et constitué par des éléments présentant un profil correspondant à la section de ladite autre pièce, l'un au moins desdits éléments étant en partie élastiquement déformable et au moins un organe de serrage agissant sur celui desdits éléments qui est partiellement déformable pour le forcer en direction des autres éléments, de sorte que ledit élément partiellement déformable, en se déformant, déforme localement le rebord de ladite autre pièce.

On réalise ainsi une déformation locale qui permet d'amener en coïncidence exacte deux bords ou rives à rendre solidaires l'une de l'autre, sans mise en jeu de forces excessives, ceci en raison de la concentration de l'effort de serrage sur une zone réduite.

Selon une autre caractéristique de l'invention, le second anneau précité est formé de deux éléments, tous deux partiellement déformables, articulés l'un à l'autre par l'une de leurs extrémités et soumis, à leurs autres extrémités, à l'organe de serrage précité.

D'autres caractéristiques et avantages de l'invention apparaîtront au cours de la description qui va suivre.

Dans les dessins annexés donnés uniquement à titre d'exemple non limitatif :

la figure 1 représente, de façon schématique, l'accostage d'une virole et d'un fond pour la fabrication d'un récipient avant rétreint local du fond ;

la figure 2 correspond à la figure 1 mais après rétreint local du fond ;

la figure 3 représente, en coupe selon la ligne III-III de la figure 1, un dispositif d'accostage selon un mode de réalisation de l'invention.

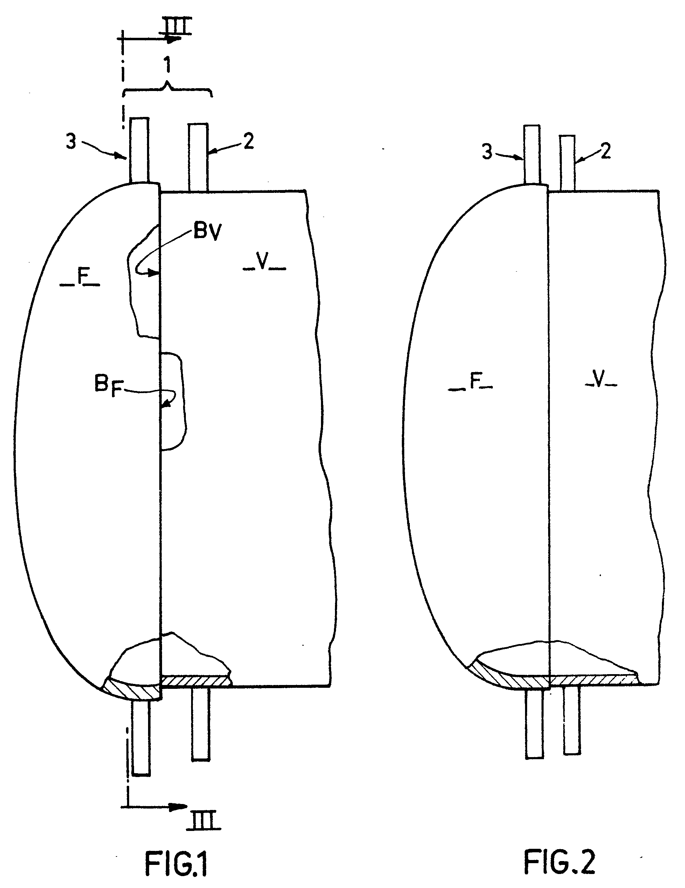

En se référant aux figures 1 et 2, on voit une virole V et un fond F, en tôle d'acier et de section circulaire, qui doivent être accostés puis rendus solidaires l'un de l'autre le long de leurs bords Bv, Bf, respectivement pour former, après soudage définitif, un récipient ou analogue.

Le dispositif d'accostage selon l'invention, désigné d'une façon générale par la référence 1, comporte deux anneaux représentés schématiquement en 2 et 3 encerclant respectivement la virole V et le fond F. L'anneau 2, de forme connue, c'est-à-dire non déformable, sert simplement à maintenir la virole V tandis que l'anneau 3, partiellement déformable, permet une déformation locale du fond F de façon à amener le bord dudit fond en coïncidence exacte avec le bord de la virole, supprimant ainsi toute dénivellation entre lesdits bords.

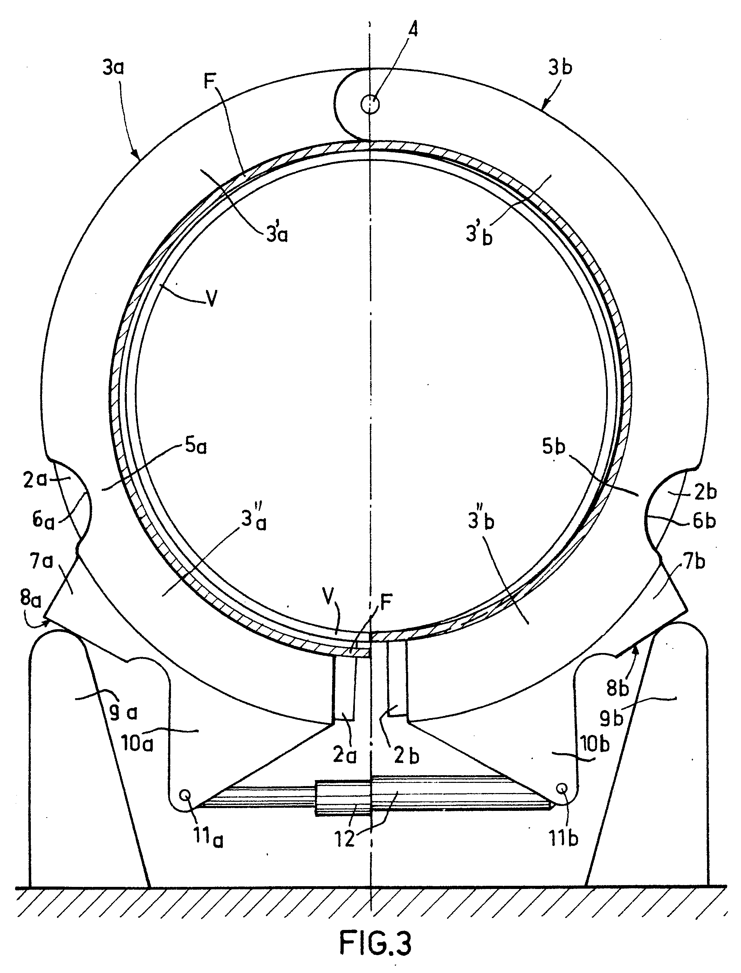

En se référant à la figure 3, qui montre de façon détaillée le dispositif d'accostage 1, l'anneau 2 est supposé constitué, de façon classique, par deux éléments rigides semi-circulaires 2a et 2b, articulés l'un à l'autre à leur partie supérieure (non représentée) et munis à leur partie inférieure, d'un vérin de serrage (non représenté) qui tend à les rapprocher l'un de l'autre. L'anneau 3 est constitué, selon le mode de réalisation représenté, par deux éléments 3a et 3b, de forme également sensiblement semi-circulaire, articulés l'un à l'autre à leurs extrémités supérieures par une goupille ou analogue 4. Chacun des éléments 3a et 3b est formé de deux parties rigides 3'a, 3''a et 3'b, 3''b séparées par une zone de moindre résistance mécanique 5a, 5b élastiquement déformable, cette zone de moindre résistance mécanique résultant de la présence d'une échancrure 6a, 6b ménagée sur le bord externe de l'élément, qui diminue localement son épaisseur dans le sens radial. Chaque élément semi circulaire 3a et 3b est muni en outre, dans la région correspondant aux parties 3''a et 3''b, d'un talon ou analogue 7a, 7b présentant une face plane 8a, 8b, grâce à laquelle ledit anneau repose sur des appuis fixes 9a, 9b. Chacun des éléments 3a, 3b, est muni en outre, à son extrémité inférieure, d'oreilles 10a, 10b auxquelles est articulé en 11a, 11b, un vérin de serrage hydraulique 12.

On voit qu'en actionnant le vérin 12 de façon qu'il rapproche l'une de l'autre les extrémités inférieures des éléments 3a, 3b, il se produit une déformation partielle de chacun desdits éléments au niveau des régions 5a et 5b ; c'est-à-dire que les parties 3'a et 3'b restent fixes tandis que les parties 3''a et 3''b sont entraînées par le vérin, passant de la position représentée à gauche (3''a) à la position représentée à droite (3''b). Cette déformation partielle de l'anneau 3 crée une contrainte mécanique locale et par conséquent un rétreint local du bord Bf du fond F ; cette déformation et ce rétreint sont contrôlés par l'action sur le vérin 12 de façon à amener en coïncidence exacte les deux lèvres à souder comme représenté à la figure 2.

On peut alors procéder au soudage par points de ces deux lèvres de façon à les rendre solidaires l'une de l'autre. Ce pointage peut être effectué de préférence par l'intérieur du récipient plus accessible que l'extérieur en raison de la présence des anneaux de serrage.

Il suffit ensuite de faire tourner, après desserrage des anneaux, l'ensemble de la virole et du fond pour permettre un nouvel accostage et un nouveau pointage partiel et ainsi de suite jusqu'à avoir réalisé les accostages et pointages sur la totalité du pourtour des deux pièces.

La pratique montre que ces opérations peuvent être effectuées par quatre rotations successives, de 90° environ chacune.

Bien entendu le soudage par points de la virole et du fond ne constitue qu'une solidarisation provisoire, un soudage ultérieur, par exemple à l'arc électrique, devant être effectué ensuite, après enlèvement du dispositif d'accostage, pour l'obtention du récipient définitif.

Bien entendu l'invention n'est nullement limitée aux modes de réalisation décrits et représentés qui n'ont été donnés qu'à titre d'exemples.

C'est ainsi par exemple que chaque anneau au lieu d'être constitué de deux éléments semi-circulaires pourrait être constitué par une pluralité d'éléments en forme d'arc de cercle d'ouverture quelconque, de même la zone de moindre résistance mécanique pourrait résulter, au lieu d'une échancrure, d'une moindre épaisseur de l'élément dans le sens longitudinal.

## Revendications

1. Procédé d'accostage de deux pièces (F, V) cylindriques faites en un matériau de faible épaisseur suffisamment malléable pour se déformer sous l'effet d'une contrainte mécanique et destinées à être assemblées bord à bord pour former un élément unique, par exemple une virole (V) et un fond circulaire (F) en tôle destinés à être soudés par leurs rebords de façon à former un récipient, cuve ou analogue, les sections de ces deux pièces dans le plan desdits bords ($B_V$, $B_F$) à assembler présentant des différences dimensionnelles empêchant une coïncidence rigoureuse et totale d'un bord avec l'autre, caractérisé en ce qu'il consiste à amener les bords ($B_V$, $B_F$) à assembler dans un même plan puis en face l'un de l'autre, à exercer localement sur l'un ($B_F$) d'eux une contrainte mécanique qui tend à le rétreindre de façon à l'amener en coïncidence avec l'autre bord ($B_V$), à rendre lesdits bords, ainsi amenés en coïncidence, localement solidaires l'un de l'autre, à relâcher la contrainte mécanique puis à exercer successivement et de proche en proche, de telles contraintes mécaniques et de telles opérations de solidarisation sur la totalité de pourtour desdites pièces.

2. Procédé selon la revendication 1, caractérisé en ce que les bords précités ($B_V$, $B_F$) sont rendus solidaires l'un de l'autre par soudage par points.

3. Procédé selon la revendication 2, caractérisé en ce que le soudage par points est effectué de l'intérieur des pièces.

4. Procédé selon la revendication 1, caractérisé en ce que l'on entraîne les deux pièces rendues solidaires localement l'une de l'autre en rotation d'un angle donné entre deux opérations successives de rétreint et de solidarisation, de façon à effectuer lesdites opérations en un endroit fixe donné.

5. Dispositif d'accostage de deux pièces cylindriques (F, V) faites en un matériau de faible épaisseur suffisamment malléable pour se déformer sous l'effet d'une contrainte mécanique et destinées à être assemblées bord à bord pour la mise en œuvre du procédé selon les revendications 1 à 4 du type comportant un anneau d'accostage (2) destiné à être placé autour du bord ($B_V$) de l'une (V) des pièces et constitué par des éléments (2a, 2b) rigides présentant un profil correspondant à la section de ladite pièce (V) et un organe de serrage (12) au moins agissant sur lesdits éléments pour les forcer en direction l'un de l'autre, ledit dispositif étant caractérisé en ce qu'il comporte également un second anneau d'accostage (3), destiné à être placé autour du bord ($B_F$) de l'autre pièce (F), et constitué par des éléments (3a, 3b) présentant un profil correspondant à la section de ladite autre pièce, l'un au moins des dits éléments étant en partie élastiquement déformable, au moins un organe de serrage (12) agissant sur celui des dits éléments (3a, 3b) qui est partiellement déformable pour le forcer en direction des autres éléments, de sorte que ledit élément partiellement déformable, en se déformant, déforme localement le rebord de ladite autre pièce (F).

6. Dispositif selon la revendication 5, caractérisé en ce que le second anneau (3) précité est formé de deux éléments (3a, 3b) tous deux partiellement déformables, articulés l'un à l'autre par l'une de leurs extrémités, et soumis, à leurs autres extrémités, à l'organe de serrage (12) précité.

7. Dispositif selon la revendication 6, caractérisé en ce que chacun des deux éléments (3a, 3b) précités, comporte deux parties rigides (3'a, 3"a ; 3'b, 3"b) séparées par une zone de moindre résistance mécanique (5a, 5b) élastiquement déformable.

8. Dispositif selon la revendication 7, caractérisé en ce que la zone de moindre résistance mécanique précitée (5a, 5b) résulte de la présence d'une échancrure (6a, 6b) qui diminue localement l'épaisseur dans le sens radial, dudit élément semi-circulaire (3a, 3b).

9. Dispositif selon la revendication 8, caractérisé en ce que les deux éléments partiellement déformables précités (3a, 3b) sont de forme semi-circulaire.

10. Dispositif selon la revendication 5, caractérisé en ce que les moyens de serrage (12) précités sont constitués par des vérins hydrauliques.

## Claims

1. Process to connect two cylindrical pieces (F, V) made of material of small thickness sufficiently malleable to be deformed under the effect of a mechanical tension and defined to be assembled edge to edge to form a unique element, for example a ring (V) and a circular bottom (F) from metal sheet defined to be welded at the edges thereof to form a container, tank or the like, the sections of these two pieces in the plane of these edges ($B_V$, $B_F$) to be assembled, presenting dimensional differences avoiding a precise and total coincidence of one edge with the other, characterized by the steps of bringing together the edges ($V_V$, $B_F$) to be assembled in the same plane face to face, of locally exerting a mechanical tension on one ($B_F$) of the two tending to reduce the edge in order to coincide it with the other edge ($B_V$), of locally form locking the said edges thus coincided, together, of releasing the mechanical tension and then of exerting successivly and nearer and nearer these mechanical tensions and these operations of form locking on the total of the periphery of the said pieces.

2. Process according to claim 1, characterized by that the said edges ($B_V$, $B_F$) are form locked together by spot welding.

3. Process according to claim 2, characterized by that the spot welding is effected from inside of the pieces.

4. Process according to claim 1, characterized by that the two locally together form locked pieces are rotated at an angle defined between two successive operations of tensioning and form locking in order to effect the said operations in a fixed given point.

5. Apparatus to connect two cylindrical pieces (F, V) made from a material of small thickness sufficiently malleable to be deformed under the effect of a mechanical tension and defined to be assembled edge to edge to perform the process according to the claims 1 to 4 of the type comprising a connecting ring (2) defined to be placed around the edge ($B_V$) of one (V) of the pieces and consisting of rigid elements (2a, 2b) with a profile corresponding to the cross section of said piece (V) and a clamping element (12) at least acting on the said elements to force them in direction to each other, the apparatus being characterized by that it comprises also a second connecting ring (3) defined to be placed around the edge ($B_F$) of the other piece (F), and consisting of elements (3a, 3b) having a profile corresponding to the cross section of said other piece, the one of at least said elements being partially flexibly deformable, at least one clamping element (12) acting on that of the said elements (3a, 3b) which is partially deformable in order to force it in the direction of the other elements such that the said partially deformable element deforms locally the edge of the said other piece (F), while it deforms itself.

6. Apparatus according to claim 5, characterized by that the said second ring (3) is formed by two elements (3a, 3b) both partially deformable, connected one to another by one of heir ends and submitted at the other ends thereof to the said clamping element (12).

7. Apparatus according to claim 6, characterized by that each of the two elements (3a, 3b) comprises two rigid parts (3'a, 3''a ; 3'b, 3''b) separated by an elastically deformable zone of minor mechanical resistance (5a, 5b).

8. Apparatus according to claim 7, characterized by that the said zone of minor mechanical resistance (5a, 5b) results from the presence of an arcuate recess (6a, 6b) diminishing locally the thickness in the radial sense of the said semicircular element (3a, 3b).

9. Apparatus according to claim 8, characterized by that the two said partially deformable elements (3a, 3b) are semi-circular.

10. Apparatus according to claim 5, characterized by that the clamping means (12) consist of hydraulic cylinders.

## Ansprüche

1. Verfahren zum Anschließen zweier zylindrischer Stücke (F, V) aus einem Material geringer Dicke und ausreichend verformbar derart, daß es sich unter der Wirkung einer mechanischen Belastung bzw. Druckes verformt, wobei die Stücke Rand an Rand zur Bildung eines einzigen Elementes zusammengefügt werden können, beispielsweise ein Ring (V) und ein kreisförmiger Boden (F) aus Blech, die an ihren Rändern zur Bildung eines Behälters, Tanks oder dergleichen zusammengeschweißt werden können, wobei die Abschnitte dieser zwei Stücke in der Ebene dieser zusammenzufügenden Ränder ($B_V$, $B_F$) unterschiedliche Abmaße haben, die ein genaues und vollständiges Zusammentreffen eines Randes mit dem anderen verhindern, dadurch gekennzeichnet, daß die zusammenzufügenden Ränder ($B_V$, $B_F$) sich einander gegenüberliegend in dieselbe Ebene gebracht werden, auf eines ($B_F$) der zwei Stücke örtlich ein mechanischer Druck aufgebracht wird, der auf eine Reduzierung desselben derart abzielt, daß ein Zusammentreffen mit dem anderen Rand ($B_V$) herbeigeführt wird, die so zum Zusammentreffen gebrachten Ränder örtlich formschlüssig miteinander verbunden werden, der mechanische Druck gelockert wird und dann diese mechanischen Drücke und dieses formschlüssige Verbinden allmählich und immer näher auf der Gesamtheit des Umfanges dieser Stücke ausgeübt werden.

2. Verfahren nach Anspruch 1, dadurch gekennzeichnet, daß die Ränder ($B_V$, $B_F$) durch Punktschweißen formschlüssig miteinander verbunden werden.

3. Verfahren nach Anspruch 2, dadurch gekennzeichnet, daß das Punktschweißen vom Inneren der Stücke her durchgeführt wird.

4. Verfahren nach Anspruch 1, dadurch gekennzeichnet, daß die zwei örtlich formschlüssig miteinander verbundenen Teile um einen Winkel gedreht werden, der zwischen zwei aufeinanderfolgenden Tätigkeiten des Querschnittsverminderns und des formschlüssigen Verbindens gegeben ist derart, daß diese Tätigkeiten an einer gegebenen festen Stelle durchgeführt werden.

5. Vorrichtung zum Anschließen zweier zylindrischer Werkstücke (F, V) aus einem Material geringer Dichte und ausreichend verformbar, daß es sich unter der Wirkung eines mechanischen Druckes verformt, wobei die zwei Werkstücke Rand an Rand zusammengefügt werden sollen, zur Durchführung des Verfahrens nach den Ansprüchen 1 bis 4, mit einem Anschließring (2), der um den Rand ($B_V$) des einen (V) der Werkstücke herumgelegt werden soll und aus starren Elementen (2a, 2b) besteht, die ein Profil entsprechend dem Querschnitt dieses Werkstückes (V) haben, und mit einem Einspannorgan (12), das mindestens auf die elemente wirkt, um sie in Richtung aufeinanderzu zu zwingen, dadurch gekennzeichnet, daß die Vorrichtung auch einen zweiten Anschließring (3) aufweist, der um den Rand (B$_F$) des anderen Werkstückes (F) gelegt werden soll und aus Elementen (3a, 3b) besteht, die ein Profil entsprechend dem Querschnitt des anderen Werkstückes haben, daß eines mindestens dieser Elemente teilweise elastisch verformbar ist und daß mindestens ein Einspannorgan (12) auf dieses Element (3a, 3b) wirkt, welches teilweise verformbar ist, um es in Richtung der anderen Elemente derart zu zwingen, daß dieses teilweise verformbare Element dadurch, daß es sich verformt, örtlich den Rand des anderen Werkstückes (F) verformt.

6. Vorrichtung nach Anspruch 5, dadurch gekennzeichnet, daß der zweite Ring (3) aus zwei Elementen (3a, 3b) gebildet ist, die beide teilweise verformbar sind, an einem ihrer Enden aneinander angeschlossen sind und an ihren anderen Enden dem genannten Einspannorgan (12) unterworfen sind.

7. Vorrichtung nach Anspruch 6, dadurch gekennzeichnet, daß jedes der zwei Elemente (3a, 3b) zwei starre Teile (3′a, 3″a ; 3′b, 3″b) aufweist, welche durch eine elastisch verformbare Zone (5a, 5b) geringeren mechanischen Widerstandes getrennt sind.

8. Vorrichtung nach Anspruch 7, dadurch gekennzeichnet, daß die Zone geringeren mechanischen Widerstandes 5a, 5b) sich aus der Gegenwart einer halbmondförmigen Aussparung (6a, 6b) ergibt, welche örtlich die Dicke des halbkreisförmigen Elementes (3a, 3b) in radialem Sinne verringert.

9. Vorrichtung nach Anspruch 8, dadurch gekennzeichnet, daß die zwei teilweise verformbaren Elemente (3a, 3b) halbkreisförmig sind.

10. Vorrichtung nach Anspruch 5, dadurch gekennzeichnet, daß die Einspannmittel (12) aus Hydraulikzylindern bestehen.

FIG.1

FIG.2

FIG.3